# EUROPÄISCHE PATENTSCHRIFT

(11) **EP 3 070 358 B1**
(45) Veröffentlichungstag und Bekanntmachung des Hinweises auf die Patenterteilung: **21.11.2018**
(21) Anmeldenummer: 16000463.6
(22) Anmeldetag: 10.03.2011
(51) Int. Cl.: F16D 21/06, F16D 25/08

(54) **DOPPELKUPPLUNG**
DOUBLE CLUTCH
EMBRAYAGE DOUBLE

(30) Priorität: 25.03.2010 DE 102010012865
(43) Veröffentlichungstag der Anmeldung: 21.09.2016
(62) Teilanmeldung aus: 11718909.2
(73) Patentinhaber: Schaeffler Technologies AG & Co. KG, 91074 Herzogenaurach (DE)
(72) Erfinder: Krebs, Florian, 77815 Bühl (DE); Kimmig, Karl-Ludwig, 77883 Ottenhöfen (DE); Daikeler, René, 77880 Sasbach (DE)

(56) Entgegenhaltungen:
- WO-A1-2008/064648
- FR-A- 1 381 432
- GB-A- 499 882
- GB-A- 1 430 911

## Beschreibung

Die Erfindung betrifft eine Doppelkupplung, mit dessen Hilfe bei einem Kraftfahrzeug eine motorseitige Eingangswelle mit zwei koaxial zueinander angeordneten getriebeseitigen Ausgangswellen im Wesentlichen zugkraftunterbrechungsfrei gekuppelt werden kann.

Doppelkupplungen umfassen eine erste Kupplung und eine zweite Kupplung. Die beiden Teil-Kupplungen weisen jeweils eine Anpressplatte auf, die relativ zu einer Gegenplatte axial bewegt werden kann, um eine zwischen der jeweiligen Gegenplatte und der jeweiligen Anpressplatte angeordnete Kupplungsscheibe reibschlüssig zu kuppeln. Die Kupplungsscheibe der ersten Kupplung kann mit einer ersten Ausgangswelle verbunden sein, während die Kupplungsscheibe der zweiten Kupplung mit der zweiten Ausgangswelle verbunden sein kann. Um den erforderlichen Reibschluss zwischen der Gegenplatte und der Kupplungsscheibe sowie zwischen der Kupplungsscheibe und der Anpressplatte bereitzustellen, weisen die Gegenplatte, die Anpressplatte und die Kupplungsscheibe jeweils aufeinander zu gerichtete Reibflächen auf. Zur Betätigung der Kupplung kann die jeweilige Anpressplatte mit Hilfe einer Betätigungseinrichtung hydraulisch auf die Gegenplatte zu gedrückt werden. Mit der Anpressplatte und der Gegenplatte der jeweiligen Kupplung ist am radial äußeren Ende der Gegenplatte und der Anpressplatte eine Blattfeder verbunden, um zum Öffnen der Kupplung die Anpressplatte mit Hilfe der Federkraft der Blattfeder in eine Ausgangsposition zurückzudrücken.

Die Patentschrift FR1381432 offenbart eine Doppelkupplung gemäß den Oberbegriff von Anspruch 1.

Es besteht ein ständiges Bedürfnis, dass Doppelkupplungen bei einem begrenzten Bauraum möglichst große Momente übertragen können.

Es ist die Aufgabe der Erfindung, eine Doppelkupplung zu schaffen, die bei einem begrenzten Bauraum ein großes Moment übertragen kann.

Die Lösung der Aufgabe erfolgt erfindungsgemäß durch die Merkmale des Anspruchs 1. Bevorzugte Ausgestaltungen der Erfindung sind in den Unteransprüchen angegeben.

Die erfindungsgemäße Doppelkupplung zum Kuppeln einer motorseitigen Eingangswelle mit einer ersten getriebeseitigen Ausgangswelle und/oder einer zweiten getriebeseitigen Ausgangswelle weist eine erste Kupplung auf, die eine relativ zu einer ersten Gegenplatte axial bewegbare erste Anpressplatte zum Kuppeln einer mit der ersten Ausgangswelle verbundenen ersten Kupplungsscheibe aufweist. Die erste Anpressplatte umfasst einen zur ersten Gegenplatte weisenden ersten Reibbereich. Die Doppelkupplung weist ferner eine zweite Kupplung auf, die eine relativ zu einer zweiten Gegenplatte axial bewegbare zweite Anpressplatte zum Kuppeln einer mit der zweiten Ausgangswelle verbundenen zweiten Kupplungsscheibe aufweist. Die zweite Anpressplatte umfasst einen zur zweiten Gegenplatte weisenden zweiten Reibbereich. Mit der ersten Anpressplatte ist ein erstes Federelement zum axialen Bewegen der ersten Anpressplatte in eine erste Ausgangsposition verbunden. Mit der zweiten Anpressplatte ist ein zweites Federelement zum axialen Bewegen der zweiten Anpressplatte in eine zweite Ausgangsposition verbunden. Erfindungsgemäß ist das erste Federelement zumindest teilweise, bevorzugt vollständig radial innerhalb eines radial äußeren Randes des ersten Reibbereichs angeordnet und/oder das zweite Federelement ist vollständig radial innerhalb eines radial äußeren Randes des zweiten Reibbereiches angeordnet.

Da das Federelement nicht am radial äußeren Ende der Anpressplatte und der Gegenplatte angeordnet ist, ist der Bauraumbedarf in radialer Richtung für das Federelement entfallen. Der so gewonnene Bauraum kann genutzt werden, um die Doppelkupplung in radialer Richtung zu verkleinern und/oder um die Gegenplatte, die Anpressplatte und/oder die Kupplungsscheibe nach radial außen zu vergrößern. Durch die Verlängerung der Anpressplatte, der Gegenplatte und/oder der Kupplungsscheibe in radialer Richtung kann die Reibfläche entsprechend vergrößert werden, wodurch bei einem begrenzten Bauraum ein größeres Moment übertragen werden kann. Ferner ist es möglich, die radiale Erstreckung der Reibbelege beizubehalten und durch eine Versetzung der Reibbelege auf einen größeren Nenndurchmesser größere mittlere Reibradien zu erreichen, die ein Absenken der erforderlichen Reibungskraft und/oder eine erhöhte Momentenkapazität ermöglichen. Es ist auch möglich bei einer Verlagerung der Reibbelege auf einen größeren Nenndurchmesser die Reibfläche im Wesentlichen konstant zu halten, wodurch die radiale Erstreckung der Reibbelege reduziert werden kann. Dadurch wird radial innerhalb der Reibbelege zusätzlicher freier Bauraum geschaffen, ohne die Kupplungseigenschaften nachteilig zu beeinflussen. Insbesondere ist es möglich, die Reibflächen derart zu dimensionieren, dass es möglich ist, die jeweiligen Kupplungen als trockene direkt betätigte Kupplung auszugestalten. Insbesondere ist es nicht erforderlich, zur Betätigung der jeweiligen Kupplung die Anpressplatte über eine Hebelfeder mit einer Betätigungseinrichtung zu verbinden. Die durch die Hebelfeder ermöglichte Übersetzung ist nicht mehr erforderlich, um eine ausreichende Anpresskraft zur Übertragung eines ausreichenden Moments bereitzustellen. Dies ermöglicht es, Bauelemente, die die Hebelfeder lagern, einzusparen, so dass der Aufbau der Doppelkupplung deutlich vereinfacht werden kann und kostengünstiger herzustellen ist.

Im Regelfall umfasst ausschließlich die Kupplungsscheibe Reibbeläge, so dass Reibungswärme in die Gussmassen oder Stahlmassen von Gegenplatte bzw. Anpressplatte abgeleitet werden können.

Im Sinne eines selbständigen erfinderischen Gedankens (der mit den vorstehend beschriebenen erfindungsgemäßen Gegenstand kombiniert sein kann, aber auch selbständig mit anderen Kupplungsarten kombiniert sein kann) kann auch vorgesehen sein, dass neben der Kupplungsscheibe auch die Anpressplatte und/oder die Gegenplatte Reibbeläge aufweisen. Diese zusätzlichen Reibbeläge sollten ganz vorzugsweise wärmeleitfähig sein, damit die Reibungswärme abfließen kann. Ein geeignetes Reibmaterial für solche an Gegenplatte und/oder Anpressplatte vorgesehene Reibbeläge sind beispielsweise Kupfer-Sinter-Materialien.

Es könnte hierbei alternativ auch vorgesehen sein, dass die Kupplungsscheibe zumindest eine Stahlreibfläche/Gussreibfläche umfasst und dass Anpressplatte und/oder Gegenplatte Reibbeläge umfassen, welche dann wärmeleitend ausgebildet sein sollten.

Der jeweilige Reibbelag könnte in dem jeweiligen Reibbereich an der Anpressplatte/der Gegenplatte anliegen und insbesondere mit der Anpressplatte durch Kleben und/oder Vernieten verbunden sein.

Durch die reibschlüssige Kontaktfläche zwischen der jeweiligen Anpressplatte mit der zugehörigen Kupplungsscheibe ist der jeweilige Reibbereich definiert, in dem der Kraftschluss zwischen der jeweiligen Anpressplatte und der zugehörigen Kupplungsscheibe beim Kuppeln der jeweiligen Kupplung hergestellt wird. Der Kraftschluss erfolgt insbesondere über mindestens einen Reibbelag, wobei die jeweilige Kupplungsscheibe und/oder wie bereits erwähnt ggf. auch die Anpressplatte mit mindestens einem Reibbelag versehen sein kann. Es ist aber auch möglich, dass mit der jeweiligen Anpressplatte und/oder der jeweiligen Kupplungsscheibe kein Reibbelag verbunden ist und beispielsweise lediglich eine direkte Stahlauflage vorgesehen ist.

Die jeweilige Kupplungsscheibe kann über eine Verzahnung mit der jeweiligen Ausgangswelle drehfest aber axial beweglich verbunden sein. Die erste Gegenplatte und/oder die zweite Gegenplatte können als separates Bauteil von einer radial äußeren Gehäusewand nach radial innen abstehen. Insbesondere ist ein mit der motorseitigen Eingangswelle verbindbarer Deckel vorgesehen, wobei der Deckel mit der ersten Gegenplatte und der zweiten Gegenplatte drehfest verbunden ist. Es ist auch möglich, dass die erste Gegenplatte oder die zweite Gegenplatte von dem Deckel und/oder einem dem Deckel axial gegenüberliegenden Bauteil, insbesondere einstückig ausgebildet ist. Beispielsweise kann eine der Gegenplatten durch eine mit der motorseitigen Eingangswelle verbundene Schwungscheibe ausgebildet sein. Die Kupplungsscheibe kann insbesondere an voneinander wegweisenden axialen Stirnflächen jeweils einen Reibbelag aufweisen, um sowohl mit der Gegenplatte als auch mit der Anpressplatte beim Kuppeln einen reibschlüssigen Kontakt herbeizuführen. Durch den jeweiligen Reibbereich wird über seinen radial äußeren Rand eine sich in axialer Richtung erstreckende ideelle im Wesentlichen zylindrische Mantelfläche definiert, innerhalb der das jeweilige Federelement radial innen angeordnet ist. Die jeweilige Kupplungsscheibe kann über eine Verzahnung mit der jeweiligen Ausgangswelle drehfest aber axial beweglich verbunden sein. Die jeweiligen Anpressplatten und Gegenplatten sind insbesondere als separate funktionell getrennte Bauteile ausgestaltet, so dass für die Doppelkupplung eine sogenanntes "Vier-Platten-Design" möglich ist, ohne den Bauraum signifikant zu erhöhen. Die Doppelkupplung kann insbesondere mit einem motorseitig vorgelagerten und/oder getriebeseitig nachgelagerten Schwingungsdämpfer, insbesondere Zweimassenschwungrad und/oder Fliehkraftpendel und/oder Massependel direkt oder indirekt verbunden sein. Ferner kann die jeweilige Kupplungsscheibe mit Hilfe eines Scheibendämpfers gedämpft sein.

Vorzugsweise ist das erste Federelement vollständig radial oberhalb eines radial inneren Randes des ersten Reibbereichs angeordnet und/oder das zweite Federelement ist vollständig radial oberhalb eines radial inneren Randes des zweiten Reibbereiches angeordnet. Durch den jeweiligen Reibbereich kann durch seinen radial äußeren Rand und seinen radial inneren Rand ein sich in axialer Richtung erstreckendes ideelles im Wesentlichen rohzylinderförmiges Volumen definiert werden, in dem das jeweilige Federelement vollständig angeordnet ist. Das heißt, das Federelement ragt weder nach radial außen noch nach radial innen, aus den durch den Reibbereich definierten Randniveaus heraus. Alternativ ragt das Federelement nur teilweise nach radial innen oder außen über den Reibbereich hinaus. Dadurch wird gewährleistet, dass radial außerhalb des jeweiligen Reibbelags und radial innerhalb des jeweiligen Reibbelags kein Baumraum für das jeweilige Federelement benötigt wird. Statt dessen verbleibt radial innerhalb des jeweiligen Reibbelags genügend Bauraum, um beispielsweise Verbindungsstreben zur Verbindung der jeweiligen Kupplungsscheibe und/oder der jeweiligen Anpressplatte mit der jeweiligen Ausgangswelle abgewinkelt auszugestalten, wodurch es möglich ist, den Bauraum in axialer Richtung zu reduzieren und die Doppelkupplung kompakter und bauraumsparender auszugestalten.

Besonders bevorzugt ist das erste Federelement direkt mit der zweiten Gegenplatte verbunden. Das erste Federelement ist somit nicht zwischen der ersten Gegenplatte und der ersten Anpressplatte, sondern mit der ersten Anpressplatte und der zweiten Gegenplatte verbunden. Über das erste Federelement ist somit die Anpressplatte der ersten Kupplung mit der Gegenplatte der zweiten Kupplung direkt verbunden. Hierbei wird die Erkenntnis ausgenutzt, dass sowohl die erste Gegenplatte als auch die zweite Gegenplatte direkt oder indirekt mit einem gemeinsamen Gehäuse oder Deckel verbunden sind und somit keine kinematischen Schwierigkeiten auftreten können, wenn das erste Federelement statt mit der ersten Anpressplatte mit der zweiten Anpressplatte verbunden ist. Je nach Ausgestaltung des ersten Federelements und einer mit der ersten Anpressplatte verbundenen Betätigungseinrichtung, kann das erste Federelement die erste Anpressplatte in seine Ausgangsposition drücken oder ziehen. Wenn das erste Federelement beim Schließen der ersten Kupplung auf Zug beansprucht wird, kann das erste Federelement die Anpressplatte zum Öffnen der Kupplung in seine Ausgangsposition zurück ziehen. Wenn das erste Federelement beim Öffnen der ersten Kupplung auf Druck belastet wird, kann das erste Federelement die erste Anpressplatte zum Schließen der ersten Kupplung in seine Ausgangsposition zurück drücken. Das erste Federelement kann mit einer von dem Reibbelag wegweisenden Rückseite der ersten Anpressplatte sowie mit einer vom jeweiligen Reibbelag wegweisenden Rückseite der zweiten Gegenplatte in direktem Kontakt stehen, das heißt die jeweilige Rückseite berühren. Das erste Federelement kann beispielsweise mit der ersten Anpressplatte und/oder mit der zweiten Gegenplatte vernietet sein.

Vorzugsweise ist ein mit der ersten Gegenplatte und der zweiten Gegenplatte drehfest verbundener Deckel vorgesehen, wobei das zweite Federelement direkt mit dem Deckel verbunden ist. Das zweite Federelement ist somit nicht zwischen der zweiten Gegenplatte und der zweiten Anpressplatte, sondern zwischen der zweiten Anpressplatte und dem Deckel angeordnet. Hierbei wird die Erkenntnis ausgenutzt, dass die zweite Gegenplatte und der Deckel miteinander fest verbunden sind und somit keine kinematischen Schwierigkeiten damit verbunden sind, das zweite Federelement nicht mit der zweiten Gegenplatte, sondern mit dem Deckel zu verbinden. Das zweite Federelement kann mit einer von dem zweiten Reibbelag wegweisenden Rückseite der zweiten Anpressplatte und mit einer zur zweiten Anpressplatte weisenden Innenseite des Deckels verbunden sein. Das zweite Federelement kann insbesondere an der Rückseite der zweiten Anpressplatte sowie an der Innenseite des Deckels direkt kontaktierend anliegen. Das zweite Federelement kann insbesondere mit der zweiten Anpressplatte und/oder mit dem Deckel vernietet oder verschraubt sein.

Insbesondere sind das erste Federelement und/oder das zweite Federelement an zwei unterschiedlichen Verbindungsstellen befestigt, wobei die zwei Verbindungsstellen in Umfangsrichtung zueinander versetzt sind. Das erste Federelement und/oder das zweite Federelement verläuft somit nicht rein axial, sondern erstreckt sich auch in Umfangsrichtung. Dies ermöglicht es, für das erste Federelement und/oder für das zweite Federelement eine entsprechend große Länge vorzusehen, wodurch die Federeigenschaften des jeweiligen Federelements leichter eingestellt werden können. Ferner können für das jeweilige Federelement mehrere alternative Bauformen vorgesehen werden. Besonders bevorzugt weist das erste Federelement und/oder das zweite Federelement zumindest teilweise einen bogenförmigen Verlauf auf, wodurch sich das jeweilige Federelement über einen entsprechend größeren Winkelbereich in Umfangsrichtung erstrecken kann. Beispielsweise kann das Federelement als ein bogenförmig in Umfangsrichtung verlaufendes gewelltes Blech oder eine Vielzahl davon ausgestaltet sein, wobei die einzelnen Wellen des gewellten Blechs je nach Höhe einer angreifenden Kraft stärker oder schwächer ausgeprägt sein können.

Erfindungsgemäß weist die erste Anpressplatte eine zum ersten Reibbereich geöffnete erste Aufnahmetasche zur Aufnahme eines mit dem ersten Federelement verbundenen ersten Befestigungsmittels auf, wobei die erste Aufnahmetasche derart dimensioniert ist, dass das erste Befestigungsmittel zum ersten Reibbereich beabstandet in der ersten Aufnahmetasche aufgenommen ist. Zusätzlich oder alternativ weist die zweite Anpressplatte eine zum zweiten Reibbereich geöffnete zweite Aufnahmetasche zur Aufnahme eines mit dem zweiten Federelement verbundenen zweiten Befestigungsmittels auf, wobei die zweite Aufnahmetasche derart dimensioniert ist, dass das zweite Befestigungsmittel zum zweiten Reibbereich beabstandet, in der zweiten Aufnahmetasche aufgenommen ist. Das jeweilige Befestigungsmittel ist insbesondere als formschlüssiges Befestigungsmittel, insbesondere Nietverbindung, ausgestaltet. Als Befestigungsmittel kann aber auch eine Schraubverbindung, Schnappverbindung, Steckverbindung insbesondere mit Sicherungsringen, oder ähnliches verwendet werden. Durch die jeweilige Aufnahmetasche wird erreicht, dass das Befestigungsmittel nicht in den jeweiligen Reibbereich angeordneten Reibbereich hineinragt. Insbesondere ist die erste Aufnahmetasche und/oder die zweite Aufnahmetasche mit einem Füllstoff, wie Klebstoff, elastische Masse und/oder Kunststoff, gefüllt. Durch den Füllstoff ist es möglich, für die Anpressplatte eine im Wesentlichen absatzfreie Ebene für den Reibbereich auszubilden.

Besonders bevorzugt ist eine Betätigungseinrichtung mit einem ersten Kolben zur axialen Bewegung der ersten Anpressplatte mit Hilfe eines ersten Betätigungstopfs und einem zweiten Kolben zur axialen Bewegung der zweiten Anpressplatte mit Hilfe eines zweiten Betätigungstopfs vorgesehen, wobei der Betätigungsweg des ersten Kolbens im Wesentlichen dem Verschiebeweg der ersten Anpressplatte entspricht und/oder der Betätigungsweg des zweiten Kolbens im Wesentlichen dem Verschiebeweg der zweiten Anpressplatte entspricht. Dadurch wird eine direkt betätigte übersetzungsfreie Kupplung ausgebildet. Ein Verschwenken des jeweiligen Betätigungstopfs findet nicht statt, so dass die entsprechenden Bauteile zum Ermöglichen eines Verschwenkens des jeweiligen Betätigungstopfs eingespart werden können. Unter der Annahme eines ideell starren Betätigungstopfes entspricht der Betätigungsweg des jeweiligen Kolbens genau dem Verschiebeweg der zugehörigen Anpressplatte. Der Verschiebeweg der jeweiligen Anpressplatte unterscheidet sich von dem Betätigungsweg des zugehörigen Kolbens somit lediglich um die Wegstrecke in axialer Richtung, um die der zugehörige Betätigungstopf beim Betätigen der jeweiligen Kupplung elastisch gebogen wird.

Insbesondere sind das erste Federelement und/oder das zweite Federelement als Blattfeder ausgestaltet. Dies ermöglicht eine besonders schmale Ausgestaltung des ersten Federelements und/oder des zweiten Federelements, so dass nur ein geringer Bauraumbedarf in axialer Richtung für das jeweilige Federelement erforderlich ist.

Die Erfindung betrifft ferner einen Getriebestrang für ein Kraftfahrzeug mit einer motorseitigen Eingangswelle, einer ersten getriebeseitigen Ausgangswelle, einer zweiten getriebeseitigen Ausgangswelle und einer Doppelkupplung zum Kuppeln der Eingangswelle mit der ersten Ausgangswelle und/oder der zweiten Ausgangswelle, wobei die Doppelkupplung, wie vorstehend beschrieben, aus- und weitergebildet sein kann. Da das Federelement nicht am radial äußeren Ende der Anpressplatte und der Gegenplatte angeordnet ist, ist der Bauraumbedarf in radialer Richtung für das Federelement entfallen. Der so gewonnene Bauraum kann genutzt werden, um die Doppelkupplung in radialer Richtung zu verkleinern und/oder um die Gegenplatte, die Anpressplatte und/oder die Kupplungsscheibe nach radial außen zu vergrößern. Durch die Verlängerung der Anpressplatte, der Gegenplatte und/oder der Kupplungsscheibe in radialer Richtung kann die Reibfläche entsprechend vergrößert werden, wodurch bei einem begrenzten Bauraum ein größeres Moment übertragen werden kann. Der Getriebestrang kann insbesondere mindestens einen direkt oder indirekt mit der Doppelkupplung verbundenen Schwingungsdämpfer, insbesondere Zweimassenschwungrad und/oder Fliehkraftpendel und/oder Massependel, aufweisen, wobei der Schwingungsdämpfer in Kraftflussrichtung vor oder nach der Doppelkupplung angeordnet sein kann.

Nachfolgend wird die Erfindung unter Bezugnahme auf die anliegenden Zeichnungen anhand einer bevorzugten Ausführungsform exemplarisch erläutert. Es zeigen:
Fig. 1 eine schematische vereinfachte Schnittansicht einer Doppelkupplung und
Fig. 2 eine schematische vereinfachte Schnittansicht der Doppelkupplung aus Fig. 1 in einer in Umfangsrichtung gedrehten Schnittebene.

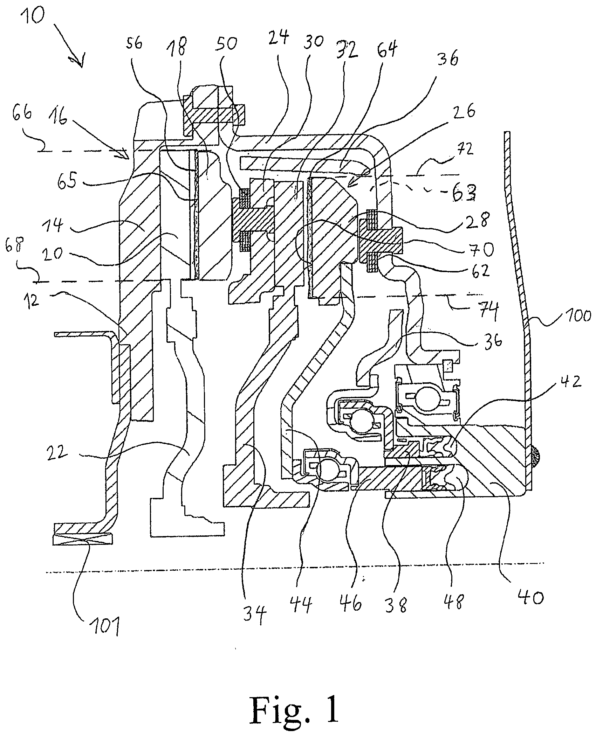

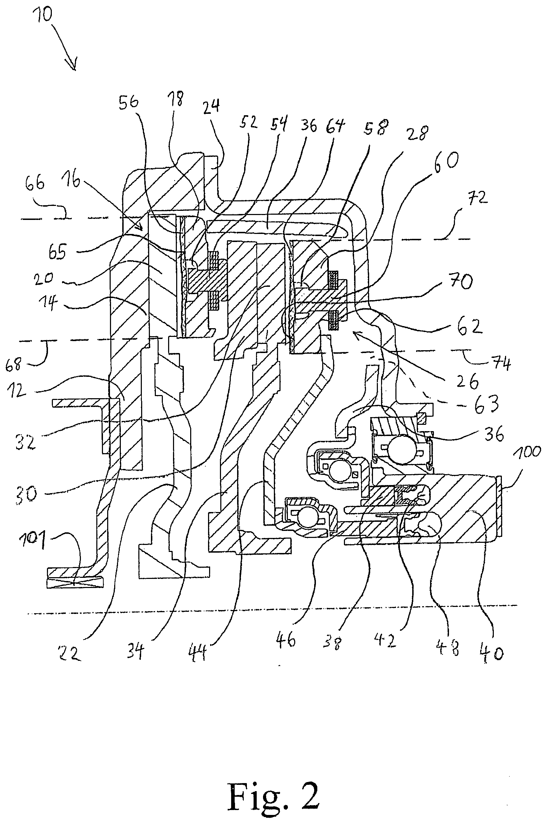

Die in Fig. 1 und Fig. 2 dargestellte Doppelkupplung 10 weist eine mit einer nicht dargestellten Eingangswelle verbundene Schwungscheibe 12 auf, die eine erste Anpressplatte 14 einer ersten Kupplung 16 ausbildet. Die erste Kupplung 16 weist ferner eine erste Anpressplatte 18 auf, die relativ zur ersten Gegenplatte 14 axial verschiebbar ausgeführt ist. Zwischen der ersten Gegenplatte 14 und der ersten Anpressplatte 18 ist eine erste Kupplungsscheibe 20 vorgesehen, die über eine erste Verbindungsstrebe 22 mit einer nicht dargestellten ersten Ausgangswelle drehfest aber axial verschiebbar verbunden ist.

Mit der über ein Lager 101 radial abgestützten Schwungscheibe 12 ist ein Deckel 24 verschraubt, der zumindest eine zweite Kupplung 26 abdeckt. Die zweite Kupplung 26 weist eine zweite Anpressplatte 28 auf, die relativ zu einer zweiten Gegenplatte 30 axial verschiebbar ist. Zwischen der zweiten Anpressplatte 28 und der zweiten Gegenplatte 30 ist eine zweite Kupplungsscheibe 32 vorgesehen, die über eine zweite Verbindungsstrebe 34 mit einer nicht gestellten zweiten Ausgangswelle drehfest aber axial verschiebbar verbunden ist. Die erste Anpressplatte 18 ist über einen ersten Betätigungstopf 36 mit einem ersten Kolben 38 einer Betätigungseinrichtung 40 verbunden. Der erste Kolben 38 kann mit Hilfe eines ersten Druckzylinders 42 ausgerückt werden, um die erste Anpressplatte 18 gegen die erste Kupplungsscheibe 20 auf die erste Gegenplatte 14 zu zu drücken. Entsprechend ist die zweite Anpressplatte 28 über einen zweiten Betätigungstopf 44 mit einem zweiten Kolben 46 der Betätigungseinrichtung 40 verbunden. Der zweite Kolben 46 kann mit Hilfe eines zweiten Druckzylinders 48 ausgerückt werden, um die zweite Anpressplatte 28 auf die zweite Kupplungsscheibe 32 und die zweite Gegenplatte 30 zu zu bewegen. Der erste Druckzylinder 42 und der zweite Druckzylinder 48 können als zueinander konzentrisch angeordnete Ringe bauraumsparend in der Betätigungseinrichtung 40 vorgesehen sein. Mit der Betätigungseinrichtung 40 ist ferner ein flexibles Element 100 zur Aufhängung der Betätigungseinrichtung und optional zur Schwingungsdämpfung verbunden.

Um den ersten Kolben 38 zum Öffnen der ersten Kupplung 16 wieder einzurücken, ist ein als Blattfeder ausgestaltetes erstes Federelement 50 vorgesehen, das sowohl mit der zweiten Gegenplatte 30 als auch mit der ersten Anpressplatte 18 direkt mit Hilfe von Vernietungen verbunden ist. Die erste Anpressplatte 18 weist eine Aufnahmetasche 52 auf, in die ein erstes Befestigungsmittel 54 zur Befestigung der ersten Blattfeder 50 mit der ersten Anpressplatte 18 hineinragen kann, ohne in einen mit der ersten Anpressplatte 18 verbundenen Anpressplattenreibbelag 56 hineinragen zu müssen. Die Kontaktfläche des ersten Anpressplattenreibbelags 56 mit der ersten Kupplungsscheibe 22 definiert einen ersten Anpressplattenreibbereich, in dem der Reibschluss zwischen der ersten Anpressplatte 18 und der ersten Kupplungsscheibe 22 beim Kuppeln der ersten Kupplung 16 hergestellt wird. Entsprechend weist die zweite Anpressplatte 28 eine zweite Aufnahmetasche 58 für ein zweites Befestigungsmittel 60 zur Befestigung eines als Blattfeder ausgestalteten zweiten Befestigungselement 62 auf, ohne dass das zweite Befestigungselement 60 in einen mit der zweiten Anpressplatte 28 verbundenen zweiten Anpressplattenreibbelag 64 hineinragen muss. Das jeweilige Befestigungsmittel 54, 60 ist insbesondere als formschlüssiges Befestigungsmittel, insbesondere Nietverbindung, ausgestaltet. Als Befestigungsmittel kann aber auch eine Schraubverbindung, Schnappverbindung, Steckverbindung insbesondere mit Sicherungsringen, oder ähnliches verwendet werden. Die Kontaktfläche des zweiten Anpressplattenreibbelags 64 mit der zweiten Kupplungsscheibe 34 definiert einen zweiten Anpressplattenreibbereich, in dem der Kraftschluss zwischen der zweiten Anpressplatte 28 und der zweiten Kupplungsscheibe 34 beim Kuppeln der zweiten Kupplung 26 hergestellt wird. Das zweite Federelement 62 ist direkt mit der zweiten Anpressplatte 28 und direkt mit dem Deckel 24 verbunden. Zur Verbindung des zweiten Federelements 62 mit dem Deckel 24 ist das zweite Federelement 62 durch den ersten Betätigungstopf 36 hindurch geführt. Insbesondere weist der Betätigungstopf 36 hierzu mindestens eine Durchführungsöffnung 63 auf, um mit Hilfe des mindestens einen zweiten Federelements 62 ohne Kollisionsgefahr mit dem ersten Betätigungstopf 36 besonders einfach und bauraumsparend die zweite Anpressplatte 28 an dem Deckel 24 anzubinden. Die jeweilige Gegenplatte 14, 24 können (müssen aber nicht) jeweils mit einem Reibbelag versehen sein, die aus Gründen der besseren Übersichtlichkeit nicht dargestellt sind. Die Kupplungsscheibe umfasst einen in üblicher Weise ausgebildeten Reibbelag. Es ist auch möglich, dass die jeweilige Anpressplatte 18, 28 und/oder die jeweilige Gegenplatte 14, 30 und oder die jeweilige Kupplungsscheibe 20, 32 keinen Reibbelag aufweisen.

Der erste Anpressplattenreibbelag 56 überdeckt in einem ersten Reibbereich 65 die erste Anpressplatte 18. Der erste Reibbereich ist nach radial außen durch einen ersten äußeren Rand 66 und nach radial innen durch einen ersten inneren Rand 68 begrenzt. Das erste Federelement 50 ist in radialer Richtung zwischen einer ideellen Verlängerung des ersten oberen Randes 66 und des ersten inneren Randes 68 angeordnet und ragt weder nach radial außen über den ersten oberen Rand 66 noch nach radial innen über den ersten inneren Rand 68 hinaus. Entsprechend überdeckt der zweite Anpressplattenreibbelag 64 in einem zweiten Reibbereich 70 die zweite Anpressplatte 28. Der zweite Reibbereich ist nach radial außen durch einen zweiten radial äußeren Rand 72 und nach radial innen durch einen zweiten radial inneren Rand 74 begrenzt. Das zweite Federelement 62 ist vollständig innerhalb einer ideellen Verlängerung des zweiten äußeren Randes 72 und des zweiten inneren Randes 74 angeordnet und ragt weder nach radial außen über den zweiten äußeren Rand 72 noch nach radial innen über den zweiten inneren Rand 74 hinaus.

Bei dem vorstehend beschriebenen Doppelkupplungsaggregat, insbesondere zur Verwendung in Verbindung mit Lastschaltgetrieben (Parallelschaltgetriebe), wird die Schließkraft für die Kupplungen dabei über Aktuatoren, vorzugsweise ohne Hebelübersetzung, unmittelbar in die Kupplungen eingeleitet, wobei die Drucktöpfe als Zwischenelemente zwischen Anpressplatten und Aktuatoren im wesentlichen starr oder mit einer definierten Elastizität ausgebildet sein können.

### Bezugszeichenliste

- 10: Doppelkupplung
- 12: Schwungscheibe
- 14: Erste Gegenplatte
- 16: Erste Kupplung
- 18: Erste Anpressplatte
- 20: Erste Kupplungsscheibe
- 22: Erste Verbindungsstrebe
- 24: Deckel
- 26: Zweite Kupplung
- 28: Zweite Anpressplatte
- 30: Zweite Gegenplatte
- 32: Zweite Kupplungsscheibe
- 34: Zweite Verbindungsstrebe
- 36: Erster Betätigungstopf
- 38: Erster Kolben
- 40: Betätigungseinrichtung
- 42: Erster Druckzylinder
- 44: Zweiter Betätigungstopf
- 46: Zweiter Kolben
- 48: Zweiter Druckzylinder
- 50: Erstes Federelement
- 52: Erste Aufnahmetasche
- 54: Erstes Befestigungsmittel
- 56: Erster Anpressplattenreibbelag
- 58: Zweite Aufnahmetasche
- 60: Zweites Befestigungsmittel
- 62: Zweites Federelement
- 63: Durchführungsöffnung
- 64: Zweiter Anpressplattenreibbelag
- 65: Erster Reibbereich
- 66: Erster äußerer Rand
- 68: Erster innerer Rand
- 70: Zweiter Reibbereich
- 72: Zweiter äußerer Rand
- 74: Zweiter innerer Rand
- 100: flexibles Element
- 101: Lager

## Patentansprüche

1. Doppelkupplung zum Kuppeln einer motorseitigen Eingangswelle mit einer ersten getriebeseitigen Ausgangswelle und/oder einer zweiten getriebeseitigen Ausgangswelle, mit
einer ersten Kupplung (16), die eine relativ zu einer ersten Gegenplatte (14) axial bewegbare erste Anpressplatte (18) zum Kuppeln einer mit der ersten Ausgangswelle verbundenen ersten Kupplungsscheibe (20) aufweist, wobei ein zur ersten Gegenplatte (14) weisender erster Anpressplattenreibbereich (56) der ersten Kupplung (16) einen ersten Reibbereich (65) der ersten Anpressplatte (18) überdeckt,
einer zweiten Kupplung (26), die eine relativ zu einer zweiten Gegenplatte (30) axial bewegbare zweite Anpressplatte (28) zum Kuppeln einer mit der zweiten Ausgangswelle verbundenen zweiten Kupplungsscheibe (32) aufweist, wobei ein zur zweiten Gegenplatte (30) weisender zweiter Anpressplattenreibbereich (64) der zweiten Kupplung (26) einen zweiten Reibbereich (70) der zweiten Anpressplatte (28) überdeckt,
einem mit der ersten Anpressplatte (18) verbundenen ersten Federelement (50) zum axialen Bewegen der ersten Anpressplatte (18) in eine erste Ausgangsposition und
einem mit der zweiten Anpressplatte (28) verbundenen zweiten Federelement (62) zum axialen Bewegen der zweiten Anpressplatte (28) in eine zweite Ausgangsposition , wobei das erste Federelement (50) zumindest teilweise, bevorzugt vollständig radial innerhalb eines radial äußeren Randes (66) des ersten Reibbereichs (65) angeordnet ist und/oder
das zweite Federelement (62) zumindest teilweise, bevorzugt vollständig radial innerhalb eines radial äußeren Randes (72) des zweiten Reibbereichs (70) angeordnet ist,
**dadurch gekennzeichnet, dass** die erste Anpressplatte (18) eine zum ersten Anpressplattenreibbereich (56) geöffnete erste Aufnahmetasche (52) zur Aufnahme eines mit dem ersten Federelement (50) verbundenen ersten Befestigungsmittels (54) aufweist, wobei die erste Aufnahmetasche (52) derart dimensioniert ist, dass das erste Befestigungsmittel (54) zum ersten Anpressplattenreibbereich (56) beabstandet in der ersten Aufnahmetasche (52) aufgenommen ist und/oder die zweite Anpressplatte (28) eine zum zweiten Anpressplattenreibbereich (64) geöffnete zweite Aufnahmetasche (58) zur Aufnahme eines mit dem zweiten Federelement (62) verbundenen zweiten Befestigungsmittels (60) aufweist, wobei die zweite Aufnahmetasche (58) derart dimensioniert ist, dass das zweite Befestigungsmittel (60) zum zweiten Anpressplattenreibbereich (64) beabstandet in der zweiten Aufnahmetasche (58) aufgenommen ist.

2. Doppelkupplung nach Anspruch 1, **dadurch gekennzeichnet, dass**
das zweite Federelement (62) zumindest teilweise, bevorzugt vollständig radial innerhalb eines radial äußeren Randes (72) des zweiten Reibbereichs (70) angeordnet ist.

3. Doppelkupplung nach einem der Ansprüche 1 und 2 **dadurch gekennzeichnet, dass** das erste Federelement (62) zumindest teilweise, bevorzugt vollständig radial oberhalb eines radial inneren Randes (68) des ersten Reibbereichs (65) angeordnet ist und/oder das zweite Federelement (62) zumindest teilweise, bevorzugt vollständig radial oberhalb eines radial inneren Randes (74) des zweiten Reibbereichs (70) angeordnet ist.

4. Doppelkupplung nach einem der Ansprüche 1 bis 3 **dadurch gekennzeichnet, dass** ein mit der ersten Gegenplatte (14) und der zweiten Gegenplatte (30) drehfest verbundener Deckel (24) vorgesehen ist, wobei das zweite Federelement (62) direkt mit dem Deckel (24) verbunden ist.

5. Doppelkupplung nach einem der Ansprüche 1 bis 4 **dadurch gekennzeichnet, dass** das erste Federelement (50) und/oder das zweite Federelement (62) an zwei unterschiedlichen Verbindungsstellen befestigt sind, wobei die zwei Verbindungsstellen in Umfangsrichtung zueinander versetzt sind.

6. Doppelkupplung nach Anspruch 1 **dadurch gekennzeichnet, dass** die erste Aufnahmetasche (52) und/oder die zweite Aufnahmetasche (58) mit einem Füllstoff, wie Klebstoff, elastische Masse und/oder Kunststoff, gefüllt ist.

7. Doppelkupplung nach einem der Ansprüche 1 bis 6 **dadurch gekennzeichnet, dass** eine Betätigungseinrichtung (40) mit einem ersten Kolben (38) zur axialen Bewegung der ersten Anpressplatte (28) mit Hilfe eines ersten Betätigungstopfs (44) und einem zweiten Kolben (46) zur axialen Bewegung der zweiten Anpressplatte (28) mit Hilfe eines zweiten Betätigungstopfs (44) vorgesehen ist, wobei der Betätigungsweg des ersten Kolbens (38) im Wesentlichen dem Verschiebeweg der ersten Anpressplatte (18) entspricht und/oder der Betätigungsweg des zweiten Kolbens (46) im Wesentlichen dem Verschiebeweg der zweiten Anpressplatte (28) entspricht.

8. Doppelkupplung nach einem der Ansprüche 1 bis 7 **dadurch gekennzeichnet, dass** das erste Federelement (50) und/oder das zweite Federelement (62) als Blattfeder ausgestaltet sind.

9. Getriebestrang für ein Kraftfahrzeug mit einer motorseitigen Eingangswelle, einer ersten getriebeseitigen Ausgangswelle, einer zweiten getriebeseitigen Ausgangswelle und einer Doppelkupplung (10) nach einem der Ansprüche 1 bis 8 zum Kuppeln der Eingangswelle mit der ersten Ausgangswelle und/oder der zweiten Ausgangswelle.

## Claims

1. Double clutch for coupling an engine-side input shaft to a first gearbox-side output shaft and/or to a second gearbox-side output shaft, having
a first clutch (16), which has a first pressure plate (18) axially movable relative to a first counterpart plate (14) and serving for the coupling of a first clutch disk (20) which is connected to the first output shaft, wherein a first pressure plate friction region (56), pointing toward the first counterpart plate (14), of the first clutch (16) overlaps a first friction region (65) of the first pressure plate (18),
a second clutch (26), which has a second pressure plate (28) axially movable relative to a second counterpart plate (30) and serving for the coupling of a second clutch disk (32) which is connected to the second output shaft, wherein a second pressure plate friction region (64), pointing toward the second counterpart plate (30), of the second clutch (26) overlaps a second friction region (70) of the second pressure plate (28),
a first spring element (50) connected to the first pressure plate (18) and serving for the axial movement of the first pressure plate (18) into a first initial position, and
a second spring element (62) connected to the second pressure plate (28) and serving for the axial movement of the second pressure plate (28) into a second initial position,
wherein the first spring element (50) is arranged at least partially, preferably entirely, radially within a radially outer edge (66) of the first friction region (65),
and/or
the second spring element (62) is arranged at least partially, preferably entirely, radially within a radially outer edge (72) of the second friction region (70),
**characterized in that** the first pressure plate (18) has a first receiving pocket (52) open toward the first pressure plate friction region (56) and serving for receiving a first fastening means (54) connected to the first spring element (50), wherein the first receiving pocket (52) is dimensioned such that the first fastening means (54) is received, spaced apart from the first pressure plate friction region (56), in the first receiving pocket (52), and/or the second pressure plate (28) has a second receiving pocket (58) open toward the second pressure plate friction region (64) and serving for receiving a second fastening means (60) connected to the second spring element (62), wherein the second receiving pocket (58) is dimensioned such that the fastening means (60) is received, spaced apart from the second pressure plate friction region (64), in the second receiving pocket (58).

2. Double clutch according to Claim 1, **characterized in that**
the second spring element (62) is arranged at least partially, preferably entirely, radially within a radially outer edge (72) of the second friction region (70).

3. Double clutch according to either of Claims 1 and 2, **characterized in that** the first spring element (62) is arranged at least partially, preferably entirely, radially above a radially inner edge (68) of the first friction region (65), and/or the second spring element (62) is arranged at least partially, preferably entirely, radially above a radially inner edge (74) of the second friction region (70).

4. Double clutch according to one of Claims 1 to 3, **characterized in that** a cover (24) is provided which is connected rotationally conjointly to the first counterpart plate (14) and to the second counterpart plate (30), wherein the second spring element (62) is connected directly to the cover (24) .

5. Double clutch according to one of Claims 1 to 4, **characterized in that** the first spring element (50) and/or the second spring element (62) are fastened at two different connecting points, wherein the two connecting points are offset with respect to one another in a circumferential direction.

6. Double clutch according to Claim 1, **characterized in that** the first receiving pocket (52) and/or the second receiving pocket (58) is filled with a filler material such as adhesive, elastic compound and/or plastic.

7. Double clutch according to one of Claims 1 to 6, **characterized in that** an actuating device (40) is provided which has a first piston (38) for the axial movement of the first pressure plate (28) by means of a first actuating pot (44) and which has a second piston (46) for the axial movement of the second pressure plate (28) by means of a second actuating pot (44), wherein the actuating travel of the first piston (38) substantially corresponds to the displacement travel of the first pressure plate (18), and/or the actuating travel of the second piston (46) substantially corresponds to the displacement travel of the second pressure plate (28).

8. Double clutch according to one of Claims 1 to 7, **characterized in that** the first spring element (50) and/or the second spring element (62) are designed as leaf springs.

9. Powertrain for a motor vehicle, having an engine-side input shaft, having a first gearbox-side output shaft, having a second gearbox-side output shaft and having a double clutch (10) according to one of Claims 1 to 8 for coupling the input shaft to the first output shaft and/or to the second output shaft.

## Revendications

1. Double embrayage pour l'accouplement d'un arbre d'entrée côté moteur à un premier arbre de sortie côté transmission et/ou à un deuxième arbre de sortie côté transmission, comprenant
un premier embrayage (16) qui présente une première plaque de pressage (18) déplaçable axialement par rapport à une première plaque conjuguée (14), pour l'accouplement d'un premier disque d'embrayage (20) connecté au premier arbre de sortie, une première région de friction de plaque de pressage (56) du premier embrayage (16) tournée vers la première plaque conjuguée (14) recouvrant une première région de friction (65) de la première plaque de pressage (18),
un deuxième embrayage (26) qui présente une deuxième plaque de pressage (28) déplaçable axialement par rapport à une deuxième plaque conjuguée (30) pour l'accouplement d'un deuxième disque d'embrayage (32) connecté au deuxième arbre de sortie, une deuxième région de friction de plaque de pressage (64) du deuxième embrayage (26) tournée vers la deuxième plaque conjuguée (30) recouvrant une deuxième région de friction (70) de la deuxième plaque de pressage (28),
un premier élément de ressort (50) connecté à la première plaque de pressage (18) pour le déplacement axial de la première plaque de pressage (18) dans une première position de sortie et
un deuxième élément de ressort (62) connecté à la deuxième plaque de pressage (28) pour le déplacement axial de la deuxième plaque de pressage (28) dans une deuxième position de sortie,
le premier élément de ressort (50) étant disposé au moins en partie, de préférence complètement, radialement à l'intérieur d'un bord radialement extérieur (66) de la première région de friction (65) et/ou
le deuxième élément de ressort (62) étant disposé au moins en partie, de préférence complètement, radialement à l'intérieur d'un bord radialement extérieur (72) de la deuxième région de friction (70),
**caractérisé en ce que** la première plaque de pressage (18) présente une première cavité de réception (52) ouverte vers la première région de friction de plaque de pressage (56) pour recevoir un premier moyen de fixation (54) connecté au premier élément de ressort (50), la première cavité de réception (52) étant dimensionnée de telle sorte que le premier moyen de fixation (54) soit reçu dans la première cavité de réception (52) de manière espacée par rapport à la première région de friction de plaque de pressage (56) et/ou la deuxième plaque de pressage (28) présentant une deuxième cavité de réception (58) ouverte vers la deuxième région de friction de plaque de pressage (64) pour recevoir un deuxième moyen de fixation (60) connecté au deuxième élément de ressort (62), la deuxième cavité de réception (58) étant dimensionnée de telle sorte que le deuxième moyen de fixation (60) soit reçu dans la deuxième cavité de réception (58) de manière espacée par rapport à la deuxième région de friction de plaque de pressage (64).

2. Double embrayage selon la revendication 1, **caractérisé en ce que** le deuxième élément de ressort (62) est disposé au moins en partie, de préférence complètement, radialement à l'intérieur d'un bord radialement extérieur (72) de la deuxième région de friction (70).

3. Double embrayage selon l'une quelconque des revendications 1 et 2, **caractérisé en ce que** le premier élément de ressort (62) est disposé au moins en partie, de préférence complètement, radialement au-dessus d'un bord radialement intérieur (68) de la première région de friction (65) et/ou le deuxième élément de ressort (62) est disposé au moins en partie, de préférence complètement, radialement au-dessus d'un bord radialement intérieur (74) de la deuxième région de friction (70).

4. Double embrayage selon l'une quelconque des revendications 1 à 3, **caractérisé en ce qu'**il est prévu un couvercle (24) connecté de manière solidaire en rotation à la première plaque conjuguée (14) et à la deuxième plaque conjuguée (30), le deuxième élément de ressort (62) étant connecté directement au couvercle (24).

5. Double embrayage selon l'une quelconque des revendications 1 à 4, **caractérisé en ce que** le premier élément de ressort (50) et/ou le deuxième élément de ressort (62) sont fixés au niveau de deux zones de connexion différentes, les deux zones de connexion étant décalées l'une par rapport à l'autre dans la direction périphérique.

6. Double embrayage selon la revendication 1, **caractérisé en ce que** la première cavité de réception (52) et/ou la deuxième cavité de réception (58) sont remplies avec une charge telle qu'un adhésif, une masse élastique et/ou un plastique.

7. Double embrayage selon l'une quelconque des revendications 1 à 6, **caractérisé en ce qu'**il est prévu un dispositif d'actionnement (40) avec un premier piston (38) pour le déplacement axial de la première plaque de pressage (28) à l'aide d'un première pot d'actionnement (44) et avec un deuxième piston (46) pour le déplacement axial de la deuxième plaque de pressage (28) à l'aide d'un deuxième pot d'actionnement (44), la trajectoire d'actionnement du premier piston (38) correspondant essentiellement à la trajectoire de déplacement de la première plaque de pressage (18) et/ou la trajectoire de déplacement du deuxième piston (46) correspondant essentiellement à la trajectoire de déplacement de la deuxième plaque de pressage (28).

8. Double embrayage selon l'une quelconque des revendications 1 à 7, **caractérisé en ce que** le premier élément de ressort (50) et/ou le deuxième élément de ressort (62) sont configurés sous forme de ressorts à lame.

9. Train de transmission pour un véhicule automobile, comprenant un arbre d'entrée côté moteur, un premier arbre de sortie côté transmission, un deuxième arbre de sortie côté transmission et un double embrayage (10) selon l'une quelconque des revendications 1 à 8 pour l'accouplement de l'arbre d'entrée au premier arbre de sortie et/ou au deuxième arbre de sortie.
